# FASCICULE DE BREVET EUROPEEN

(11) **EP 2 486 971 B1**
(45) Date de publication et mention de la délivrance du brevet: **05.04.2017**
(21) Numéro de dépôt: 12154907.5
(22) Date de dépôt: 10.02.2012
(51) Int. Cl.: B01D 53/50, B01D 53/68, B01D 53/86

(54) **Procédé de régénération thermique en ligne d'un catalyseur de dénitrification de fumées, et installation d'épuration des fumées permettant de mettre en oeuvre ce procédé**
Verfahren zur thermischen in situ Regenerierung eines Katalysators zur Abgasentstickung, und Abgasreinigungsanlage zur Umsetzung dieses Verfahrens
Method for in situ thermal regeneration of a catalyst for flue gas denitrification and flue gas purification facility for said method

(30) Priorité: 11.02.2011 FR 1100427
(43) Date de publication de la demande: 15.08.2012
(73) Titulaire: LAB SA, 69007 Lyon (FR)
(72) Inventeur: Siret, Bernard, 69200 VENISSIEUX (FR); Tabaries, Franck, 83190 OLLIOULES (FR)
(74) Mandataire: Lavoix

(56) Documents cités:
- EP-A1- 1 676 627
- DE-A1- 10 062 957
- JP-A- 5 285 343
- JP-A- 62 014 924
- US-A- 5 762 885
- US-B1- 6 383 463

## Description

La présente invention concerne un procédé de régénération thermique d'un catalyseur de dénitrification de fumées. Elle concerne également une installation d'épuration de fumées permettant de mettre en oeuvre ce procédé de régénération. L'invention s'intéresse en particulier à l'épuration des fumés de combustion, qui contiennent des oxydes d'azote.

Lors de la combustion de matières comme le charbon ou le fuel, par exemple en vue de la production d'énergie, ou bien lors de l'incinération des déchets, les fumées de combustion produites contiennent une proportion appréciable d'oxydes d'azote et ne peuvent donc pas être rejetées à l'atmosphère sans traitement. De plus, ces fumées de combustion contiennent d'autres polluants, en particulier des gaz acides comme l'acide chlorydrique ou le dioxyde de soufre, ainsi que des poussières et des particules solides.

D'une manière générale, plusieurs technologies sont disponibles et bien acceptées industriellement pour éliminer les oxydes d'azote (NOx). Une première solution consiste à agir au niveau de la combustion proprement dite. Des brûleurs dits « bas-NOx » peuvent être utilisés dans le cas de la combustion du charbon ou du fuel, ou bien l'excès d'air ou son étagement peuvent être modifiés, de façon que, dans les zones très chaudes, la formation des oxydes d'azote, à partir de l'azote de l'air, soit minimisée. Il a été également proposé d'enrichir l'atmosphère de combustion en oxygène ou de recycler du dioxyde de carbone pour accomplir cet effet. Cette première approche est limitée dans son efficacité et se révèle de plus peu commode à mettre en oeuvre dans le cas de l'incinération des déchets. De surcroît, cette solution ne peut aucunement suffire à amener la teneur en oxyde d'azote dans les fumées de combustion en deçà de 80 mg/Nm³de NOx.

Une seconde approche consiste à injecter un réactif, usuellement de l'ammoniac ou de l'urée, dans une zone particulière de la combustion. Ce réactif se décompose alors et les radicaux générés réagissent pour empêcher la formation des oxydes d'azote ou détruire ceux déjà formés. Là encore, cette solution connaît des limites : il est difficile de déplacer le rendement de destruction de plus de 70%, sauf à consentir une fuite d'ammoniac dépassant la dizaine de milligrammes par Nm³. De surcroît, pour le cas particulier de l'incinération des déchets, on ne peut pas obtenir beaucoup mieux que 120 mg/Nm³ de NOx sans avoir une fuite d'ammoniac importante. Cette solution, dite SNCR (Selective Non Catalytic Réduction), n'est donc pas suffisante pour répondre aux besoins des unités modernes.

Aussi, la technique suivie quand on a besoin d'obtenir des teneurs de NOx inférieures à 80 mg/Nm³, consiste à recourir à l'utilisation d'un catalyseur de dénitrification : on parle alors d'une solution dite SCR (Selective Catalytic Réduction). Plus précisément, on fait réagir les oxydes d'azote avec un réactif approprié sur un catalyseur spécifique, maintenu à une température relativement élevée. Le réactif employé est typiquement l'ammoniac ou l'urée. Si cette technique est maintenant bien maîtrisée, certaines contraintes et limitations, comme l'existence de poisons (oxydes alcalins, phosphore, arsenic), qui peuvent se fixer sur les sites actifs du catalyseur, ou l'existence de composés (sulfates et hydrogenosulfates d'ammonium, SO₃...), qui peuvent se déposer et bloquer les pores du catalyseur, conduisent à une perte progressive de l'activité de ce catalyseur. Cela oblige soit à remplacer le catalyseur purement et simplement, soit à procéder à sa régénération. Une telle régénération peut être de nature thermique, en élevant la température à l'aide de brûleurs, ou bien être réalisée par lavage. Dans les deux cas, le réacteur catalytique est mis hors ligne, ce qui conduit à une indisponibilité de l'installation d'épuration des fumées.

Dans ce contexte, EP-A-1 576 999 a proposé de procéder à un compartimentage complet du catalyseur et de le régénérer compartiment par compartiment. Cela permet de conserver, globalement, l'installation en ligne pendant la régénération du catalyseur. Toutefois, cette solution reste coûteuse en raison du compartimentage, ainsi qu'en raison de la complexité des circuits de fumées et de la commande de ces circuits, qui résulte de ce compartimentage.

Suivant un enseignement similaire à celui présenté juste ci-dessus, EP-A-1 676 627 divulgue un procédé de régénération thermique d'un catalyseur, dans lequel ce catalyseur est divisé en plusieurs modules adjacents, contenant chacun un bloc de catalyseur. Lorsque le catalyseur est en service, la dénitrification se fait en parallèle dans tous les modules précités. Puis, lorsqu'il devient nécessaire de régénérer le catalyseur, un ou plusieurs de ces modules sont alors « isolés » et ne fonctionnent plus en phase de traitement, mais en phase de régénération. Simultanément, les gaz à dénitrifier pénètrent dans les modules restés en phase de dénitrification, c'est-à-dire dans le module autre que celui où ceux « isolés » fonctionnant en phase de régénération. En pratique, la nécessité « d'isoler » un ou plusieurs des modules pour les régénérer, en les alimentant par un gaz de régénération dédié, alors que les autres modules continuent à être alimentés par des gaz à dénitrifier, impliquent la présence de circuits de fumée complexes, ainsi que des moyens de commande de ces circuits tels que des vannes et des registres.

Par ailleurs, de manière beaucoup plus éloignée techniquement des considérations présentées jusqu'ici, DE-A-100 62 957 divulgue, quant à lui, un procédé de régénération d'un catalyseur, cette régénération n'étant pas réalisée par voie thermique, mais étant réalisée à l'aide d'un agent de réduction destiné à réagir avec le catalyseur selon une réaction de réduction pour le régénérer. Cet agent de réduction est introduit, sans être chauffé, dans une veine de circulation de fumées à dénitrifier, par l'intermédiaire d'un dispositif d'alimentation spécifique, constitué d'une plaque ayant la forme d'une portion de disque et conçue pour, en service, tourner autour d'un moyeu dont l'axe central coïncide avec le centre de la portion de disque précitée. En pratique, il est douteux que le dispositif d'alimentation précité soit capable, de manière pérenne, de distribuer un fluide de régénération chaud. De plus, quand bien même un fluide de régénération chaud serait distribué par la plaque en forme de portion de disque appartenant à ce dispositif d'alimentation, il est plus que douteux que ce fluide puisse élever suffisamment la température du catalyseur, au niveau de sa surface d'entrée, pour le régénérer car le flux de ce fluide de régénération est constamment cisaillé ou, plus généralement, perturbé par le mouvement rotatif continu de la plaque précitée, ce qui limite significativement, voire annihile l'action thermique qu'aurait un tel fluide chaud sur le catalyseur à régénérer.

Ceci étant rappelé, le but de la présente invention est de proposer un procédé de régénération thermique d'un catalyseur de dénitrification qui, tout en étant fiable et efficace, est économiquement avantageux et qui peut être réalisé en ligne, permettant ainsi de continuer à traiter des fumées pendant la régénération.

A cet effet, l'invention a pour objet un procédé de régénération thermique d'un catalyseur de dénitrification de fumées, tel que défini à la revendication 1.

Ainsi, le procédé conforme à l'invention permet de régénérer en ligne un catalyseur de SCR par voie thermique. Une des idées à la base de l'invention est de procéder à la régénération du catalyseur non pas dans sa globalité, mais zone par portion. Pour ce faire, selon l'invention, on définit, en amont du catalyseur à régénérer, des fractions d'alimentation en un fluide de régénération chaud, ces fractions étant individuellement activées l'une après l'autre de manière à élever la température d'une zone du catalyseur : le fluide de régénération produit alors ses effets principalement, voire quasi exclusivement sur la portion du catalyseur visée par la fraction activée. Autrement dit, les fractions d'alimentation précitées correspondent à des zones de l'espace, où l'alimentation en fluide de régénération est activée tour à tour.

Des caractéristiques additionnelles avantageuses du procédé conforme à l'invention, prises isolément ou selon toutes les combinaisons techniquement possibles, sont spécifiées aux revendications dépendantes 2 à 7.

L'invention a également pour objet une installation d'épuration de fumées, telle que définie à la revendication 8.

Des caractéristiques additionnelles avantageuses de cette installation sont spécifiées aux revendications 9 à 11.

L'invention sera mieux comprise à la lecture de la description qui va suivre, donnée uniquement à titre d'exemple et faite en se référant aux dessins sur lesquels :
- la figure 1 est un schéma en perspective d'un premier mode de réalisation d'une installation conforme à l'invention ;
- la figure 2 est une coupe schématique dans le plan Il de la figure 1 ;
- la figure 3 est une section schématique à plus grande échelle, de la zone cerclée III sur la figure 2 ;
- la figure 4 est une vue analogue à la figure 1, illustrant un second mode de réalisation de l'installation conforme à l'invention ; et
- la figure 5 est une coupe schématique dans le plan V de la figure 4.

Sur les figures est représentée, de manière schématique et partielle, une installation de traitement de fumées à épurer 2. Cette installation comporte un réacteur catalytique qui est alimenté par les fumées 2 en vue de les dénitrifier. Ce réacteur contient un catalyseur 101, dit catalyseur de SCR, dans le sens où ce catalyseur permet de faire réagir des oxydes d'azote contenus dans les fumées 2 avec un réactif approprié, mélangé aux fumées 2 en amont du catalyseur 101, tel que de l'ammoniac ou de l'urée. Ce catalyseur 101, d'une technologie connue en soi, est par exemple constitué de plaques et opère à une température de service comprise entre 140°C et 260°C, de préférence entre 170°C et 240°C. En pratique, les fumées à dénitrifier 2 traversent le catalyseur 101 indifféremment dans le sens vertical descendant, comme sur les figures, ainsi que dans tout autre sens de passage, par exemple horizontal, ou vertical ascendant.

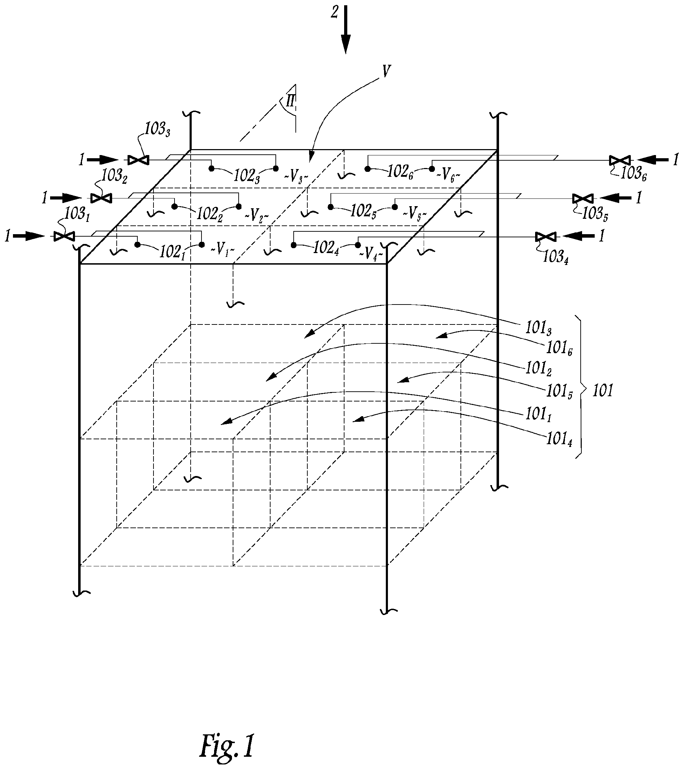

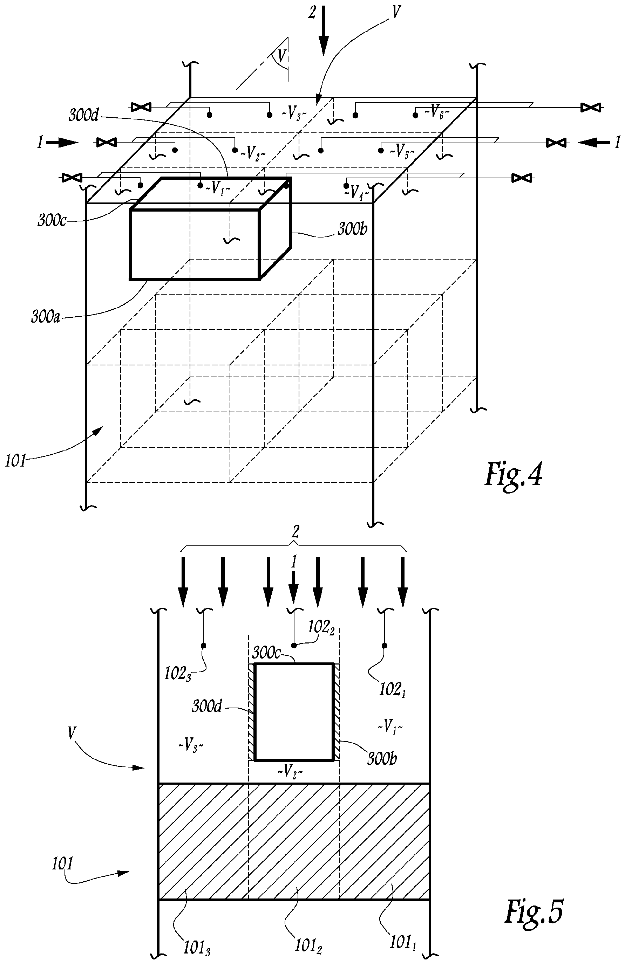

Comme bien visible sur les figures 1, 2, 4 et 5, les fumées à dénitrifier 2 sont amenées jusqu'au catalyseur 101 par un conduit ou un organe similaire, qui définit, immédiatement en amont du catalyseur, une région volumique V d'alimentation du catalyseur par les fumées. Selon une des caractéristiques de l'invention, on définit une fragmentation de cette région volumique V, en une pluralité de fractions, en l'occurrence six fractions dans l'exemple montré sur les figures, qui sont respectivement référencées V₁, V₂,... V₆. Ces fractions V₁ à V₆ sont prévues pour que chacune d'entre elles soit traversée par une partie du flux des fumées 2 : ainsi, en coupe transversale au flux des fumées 2, c'est-à-dire dans un plan perpendiculaire à la direction d'écoulement des fumées 2, ces fractions V₁ à V₆ présentent chacune une section non nulle, en étant notamment réparties de manière régulière, par exemple suivant un motif en lignes et en colonnes sur les figures. Comme expliqué ci-après, ces fractions V₁ à V₆ sont respectivement associées à des portions du catalyseur 101, référencées 101₁ à 101₆ sur les figures : ces portions 101₁ à 101₆ représentent, conjointement, la totalité du catalyseur 101, en incluant chacune une partie de la surface d'entrée du catalyseur, comme bien visible sur les figures 1 et 4. A titre de variante non représentée, les différentes fractions du volume V et les différentes portions du catalyseur 101 qui leur sont respectivement associées sont réparties suivant une seule rangée.

Par ailleurs, selon une caractéristique essentielle de l'invention, l'installation dispose d'une alimentation en un fluide de régénération 1, qui présente une température comprise entre 220°C et 450°C, c'est-à-dire une température supérieure à celle des fumées 2 admises dans le catalyseur 101. Le fluide 1 a pour fonction de régénérer le catalyseur 101, par une action essentiellement thermique. Avantageusement, ce fluide de régénération 1 induit également une action mécanique sur le catalyseur 101, par soufflage des poussières déposées sur ce catalyseur. A titre d'exemple préféré, le fluide de régénération 1 est de la vapeur d'eau, notamment surchauffée. Toutefois, à titre de variante, on peut utiliser, en tant que fluide de régénération 1, une partie des fumées 2, cette partie étant alors prélevée du flux principal des fumées à un endroit de piquage, en amont du catalyseur 101, où ces fumées sont encore à une température d'au moins 220°C. Egalement à titre de variante, le fluide de régénération 1 peut être constitué de gaz chauds distincts des fumées 2, autres que de la vapeur d'eau.

Au sein de l'installation, le fluide de régénération 1 est distribué par des moyens de distribution 102 qui comprennent, entre autres, des éléments de sortie du fluide 1 : dans l'exemple de réalisation considéré sur les figures, ces éléments de sortie sont au nombre de douze et sont référencés, par groupe de deux exemplaires, 102₁ à 102₆. Ces éléments de sortie 102₁ à 102₆ sont situés en amont du catalyseur 101, en étant répartis dans les fractions V₁ à V₆ de la région V d'alimentation du catalyseur en fumées 2. Plus précisément, dans l'exemple représenté sur les figures, les deux éléments de sortie 102₁ sont dans la fraction V₁, les deux éléments de sortie 102₂ sont dans la fraction V₂, et ainsi de suite.

En pratique, les éléments de sortie 102₁ à 102₆ sont constitués individuellement de buses permettant de pulvériser le fluide de régénération 1. A titre de variante, chacun de ces éléments de sortie est constitué d'un simple tuyau, percé d'un orifice terminal.

De plus, l'installation comporte des moyens permettant de commander l'alimentation des moyens de distribution 102 par le fluide de régénération 1. Typiquement, ces moyens 103 sont constitués d'un jeu de vannes 103₁ à 103₆ qui sont respectivement associées aux éléments de sortie 102₁ à 102₆. Par exemple, comme sur les figures, l'alimentation des deux éléments de sortie 102₁ est commandée par la même vanne 103₁, et il en est de même pour les autres éléments de sortie. Bien entendu, à titre de variante non représentée, une vanne peut être utilisée pour commander l'alimentation de chacun des deux éléments de sortie 102₁, les deux vannes ainsi associées à ces éléments 102₁ étant commandées conjointement. Dans tous les cas, une caractéristique essentielle de l'invention est que les vannes 103₁ à 103₆ sont conçues pour être pilotées de manière indépendante les unes des autres, fraction par fraction : autrement dit, on peut commander sélectivement l'ouverture de la ou des vannes associées aux éléments de sortie situés dans une des fractions V₁ à V₆, pendant que toutes les autres vannes de l'installation sont fermées. On comprend donc qu'au moins une vanne est associée par fraction du volume V, mais plus d'une vanne peut exister par fraction.

Selon l'invention, afin de régénérer le catalyseur 101, on ouvre, de manière successive et une par une, chacune des vannes 103₁ à 103₆ pendant que toutes les autres vannes restent fermées, ce qui a pour effet d'admettre le fluide de régénération 1 dans les moyens de distribution 102 jusqu'aux éléments de sortie 102₁ à 102₆, ces éléments de sortie étant ainsi actifs, par groupe de deux, de manière individuelle et les uns après les autres. Il en résulte que les différentes fractions V₁ à V₆ de la région d'alimentation V sont, successivement une par une, alimentées par le fluide de régénération 1. Ce fluide 1, du fait de la fragmentation de la région V d'alimentation du catalyseur 101, réchauffe ainsi la portion, parmi les portions de catalyseur 101₁ à 101₆, qui est soumise à l'essentiel du flux de fluide 1 provenant de la paire d'éléments de sortie activée. Ce réchauffement conduit à une désorption des poisons et des sels volatils du catalyseur 101, ainsi qu'à un soufflage mécanique des poussières déposées sur le catalyseur, ce qui régénère la portion de catalyseur concernée. En pratique, cet échauffement est successivement produit principalement sur l'une des portions 101₁ à 101₆ du catalyseur 101, comme expliqué juste avant, étant remarqué que les autres portions, notamment les portions adjacentes, peuvent alors avoir leur température en légère augmentation sans toutefois être significativement impactés, dans le sens où ces autres portions continuent à opérer à une température voisine de leur température normale de fonctionnement. Autrement dit, dans ces autres portions du catalyseur 101, la fonction principale de ce catalyseur, à savoir la réduction catalytique des oxydes d'azote, continue à être assurée.

Ainsi, selon une des caractéristiques importantes de l'invention, lors de la régénération du catalyseur 101, portion par portion, le flux des fumées 2 n'est pas interrompu, ni l'admission des réactifs utilisés pour réagir avec les oxydes d'azote contenus dans les fumées 2, comme l'ammoniac. Globalement, l'ensemble du réacteur catalytique reste opérationnel et la dénitrification des fumées 2 est ainsi maintenue. En d'autres termes, la régénération du catalyseur 101 est faite en ligne, sans nécessiter un arrêt de l'installation.

Pour une bonne mise en oeuvre de l'invention, il est important que la température de la surface d'entrée du catalyseur 101 soit, dans sa portion en cours de régénération, supérieure à 220°C, de préférence à 250°C. On comprend que l'obtention de cette température de surface dépend directement de la température du mélange gazeux juste au-dessus de cette surface, autrement dit du mélange entre le fluide de régénération 1, provenant de la fraction activée parmi les fractions V₁ à V₆, et les fumées 2 qui circulent continûment dans l'installation. Il en résulte, par voie de conséquence, que le rapport des débits entre le fluide de régénération 1 et les fumées 2 découle du nombre de fractions choisi pour fragmenter la région V d'alimentation du catalyseur 101, ainsi que des températures respectives du fluide 1 et des fumées 2. Pour des raisons économiques, un compromis doit être trouvé entre l'efficacité de régénération et le nombre de fractions, tout en tenant compte du débit de fluide de régénération 1 disponible : un bon compromis est que chacune des fractions V₁ à V₆ présente une section transversale valant, au niveau de la surface d'entrée du catalyseur 101, entre 0,3 et 5 m², de préférence entre 0,5 et 1 m².

Il est important de noter que, selon les formes de l'invention, la fragmentation de la région V d'alimentation du catalyseur 101 en fumées 2 peut être réalisée de manière virtuelle, comme dans l'exemple des figures 1 à 3, ou bien de manière physique, comme dans l'exemple des figures 4 et 5.

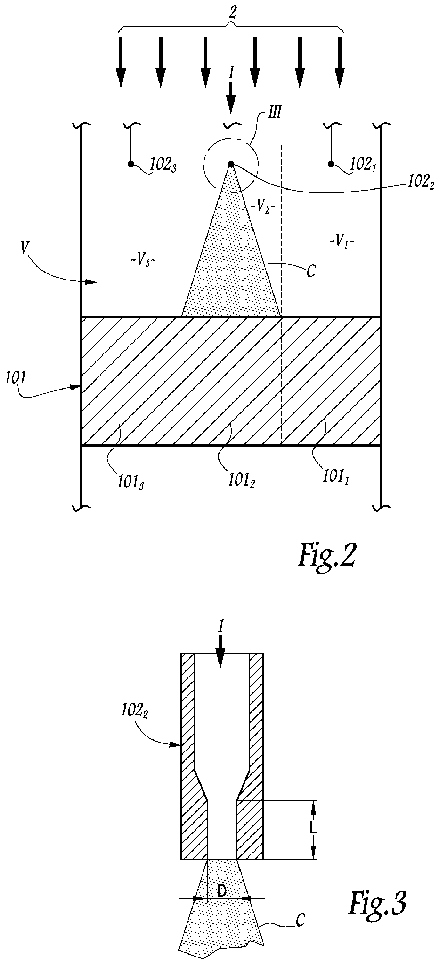

Ainsi, si l'on s'intéresse plus spécifiquement au mode de réalisation des figures 1 à 3, la fragmentation virtuelle de la région d'alimentation V repose sur les propriétés aérauliques des jets libres, à savoir que l'écoulement naturel du fluide de régénération 1 en aval des éléments de sortie 102₁ à 102₆ ne va pas immédiatement occuper tout l'espace, mais va diffuser progressivement alentour, selon un cône présentant un demi-angle au sommet d'environ 11°, conformément à la littérature technique. La figure 2 montre bien cette diffusion en cône, appliquée au cas où le fluide de régénération 1 alimente la paire d'éléments de sortie 102₂, tandis que, dans le même temps, comme expliqué plus haut, ce fluide n'alimente pas les autres éléments de sortie 102₁ et 102₃ à 102₆. Dans le même temps, les fumées à épurer 2 sont distribuées sur toutes les fractions V₁ à V₆ de la région d'alimentation V, de façon que les pertes de charges s'équilibrent : selon les lois de l'aéraulique, le flux de régénération 1 diffuse alors en formant sensiblement le cône référencé C, qui diverge en direction du catalyseur 101, en restant centré sur la portion 101₂ de ce catalyseur. De cette façon, conformément aux prescriptions de l'invention, la portion 101₂ du catalyseur 101 reçoit au moins 80% de la quantité du fluide de régénération 1, mais, bien entendu, également une partie des fumées 2. Similairement, les autres portions 101₁ et 102₃ à 101₆, en particulier les portions adjacentes à la portion 101₂, reçoivent une faible partie, voire une partie quasi nulle de la quantité du fluide de régénération 1. Ainsi, la fragmentation de la région d'alimentation V est virtuelle, dans le sens où le flux du fluide de régénération 1 est empêché de s'étendre sur toute la surface d'entrée du catalyseur 101 par confinement aéraulique.

Dans le contexte de cet exemple de réalisation des figures 1 à 3, il est avantageux que les éléments de sortie 102₁ à 102₆ des moyens de distribution 102 soient des buses du type représenté sur la figure 3, à savoir des buses présentant une partie terminale cylindrique dont le diamètre D est au plus égal à la longueur L de cette partie terminale. Toutefois, comme déjà expliqué plus haut, cette forme de réalisation des éléments de sortie n'est pas limitative de l'invention.

Si l'on s'intéresse plus spécifiquement au mode de réalisation des figures 4 et 5, la fragmentation physique de la région d'alimentation V est réalisée à l'aide de plaques ou de déflecteurs, agencés pour guider le flux du fluide de régénération 1 vers sa cible, à savoir vers la surface d'entrée de la portion du catalyseur 101 associée à la fraction du volume V, pourvue de ces plaques ou déflecteurs. Ainsi, sur les figures 4 et 5, le fluide de régénération 1 sortant de la paire d'éléments 102₂ est guidé vers la portion 101₂ du catalyseur par un jeu de quatre plaques 300a, 300b, 300c et 300d, agencées de manière à former, dans la fraction V₂, un tube à section transversale de profil rectangulaire et ouvert à ses deux extrémités. Bien entendu, les autres fractions V₁ et V₃ à V₆ sont respectivement associées à des jeux de plaques similaires, qui ne sont pas représentées sur les figures 4 et 5 et qui guident le fluide 1 respectivement vers les portions de catalyseur 101₁ et 101₃ à 101₆. Ainsi, dans une réalisation par fragmentation physique, le fluide 1 est confiné par un dispositif physique, comme les plaques 300a à 300d.

On notera que ces dispositifs de guidage ne s'étendent pas nécessairement, vers l'aval, jusqu'à la surface d'entrée du catalyseur 101 et, vers l'amont, jusqu'à la hauteur où sont situés les moyens de distribution 102, du moment que, conformément aux prescription de l'invention, ces dispositifs canalisent au moins 80% de la quantité du fluide de régénération 1 depuis la paire d'éléments de sortie 102₁, 102₂, 102₃, 102₄, 102₅ ou 102₆ activée jusqu'à la surface d'entrée de la portion associée 101₁, 101₂, 101₃, 101₄, 101₅ ou 101₆ du catalyseur 101.

## Revendications

1. Procédé de régénération thermique d'un catalyseur (101) de dénitrification de fumées (2), dans lequel :
- on dispose d'un fluide (1) de régénération du catalyseur, qui présente une température à la fois supérieure à celle des fumées à dénitrifier (2) et comprise entre 220°C et 450 °C,
- en amont du catalyseur, on fragmente la région (V) d'alimentation du catalyseur en fumées à dénitrifier (2), en plusieurs fractions qui, en coupe transversale au flux des fumées, présentent chacune une section non nulle, valant entre 0,3 et 5 m² au niveau du catalyseur, et
- pendant que le catalyseur est alimenté, via toutes les fractions de la région d'alimentation (V), par des fumées à dénitrifier (2), on alimente successivement une par une les différentes fractions par le fluide de régénération (1), de façon qu'au moins 80% de la quantité du fluide de régénération (1) atteigne la portion du catalyseur (101) associée à la fraction alimentée en fluide de régénération, en portant la température au niveau de la surface d'entrée de cette portion du catalyseur à au moins 220°C, de préférence au moins 250°C.

2. Procédé suivant la revendication 1, **caractérisé en ce qu'**on réalise la fragmentation de la région (V) d'alimentation du catalyseur (101) de manière virtuelle, par confinement aéraulique de plus de 80% de l'écoulement du fluide de régénération (1) à l'intérieur de la fraction alimentée par ce fluide.

3. Procédé suivant la revendication 1, **caractérisé en ce qu'**on réalise la fragmentation de la région (V) d'alimentation du catalyseur (101) de manière physique.

4. Procédé suivant la revendication 3, **caractérisé en ce que**, pour fragmenter de manière physique la région (V) d'alimentation du catalyseur (101), on utilise des plaques de canalisation du fluide de régénération (1), agencées immédiatement en amont du catalyseur.

5. Procédé suivant l'une quelconque des revendications précédentes, **caractérisé en ce que** le fluide de régénération (1) est constitué par un gaz chaud, distinct des fumées à épurer (2).

6. Procédé suivant la revendication 5, **caractérisé en ce que** le fluide de régénération (1) est constitué par de la vapeur vive, de préférence surchauffée, ayant une température d'au moins 220°C.

7. Procédé suivant l'une quelconque des revendications 1 à 4, caractérisé en ce le fluide de régénération (1) est constitué par une partie des fumées à dénitrifier (2), prélevée en amont du catalyseur (101) à une température d'au moins 220°C.

8. Installation d'épuration de fumées, comportant :
- un réacteur catalytique contenant un catalyseur (101) de dénitrification des fumées (2),
- une alimentation en un fluide (1) de régénération thermique du catalyseur (101), qui présente une température à la fois supérieure à celles des fumées à dénitrifier (2) et comprise entre 220°C et 450 °C,
- des moyens (102) de distribution du fluide de régénération (1) provenant de l'alimentation, ces moyens de distribution étant répartis en plusieurs groupes d'au moins un élément de sortie, ces groupes étant situés en amont du catalyseur (101), respectivement dans des fractions de la région (V) d'alimentation du catalyseur (101) en fumées à dénitrifier (2), lesquelles fractions présentent chacune, en coupe transversale au flux des fumées, une section non nulle, valant entre 0,3 et 5 m² au niveau du catalyseur, et
- des moyens (103) de commande de l'alimentation des moyens de distribution (102) par le fluide de régénération (1), ces moyens de commande étant adaptés pour, pendant que le catalyseur (101) est alimenté, via toutes les fractions de la région d'alimentation (V), par des fumées à dénitrifier (2), faire alimenter successivement un par un les différents groupes d'élément(s) de sortie par le fluide de régénération.

9. Installation suivant la revendication 8, **caractérisée en ce que** les éléments de sortie des moyens de distribution (102) sont des buses.

10. Installation suivant l'une des revendications 8 ou 9, **caractérisée en ce que** les moyens de commande (103) comprennent au moins une vanne pour chaque groupe d'élément(s) de sortie des moyens de distribution (102).

11. Installation suivant l'une quelconque des revendications 8 à 10, **caractérisée en ce qu'**elle comporte en outre des plaques de confinement du fluide de régénération (1), agencées en aval des moyens de distribution (102) et en amont du catalyseur (101).

## Patentansprüche

1. Verfahren zur thermischen Regeneration eines Katalysators (101) zur Denitrifikation von Rauchgasen (2), wobei:
- ein Regenerationsfluid (1) zur Regeneration des Katalysators bereitgestellt wird, welches eine Temperatur aufweist, die höher als die Temperatur der zu denitrifizierenden Rauchgase (2) ist und gleichzeitig zwischen 220 °C und 450 °C liegt,
- der Einspeisungsbereich (V) zum Speisen des Katalysators mit zu denitrifizierenden Rauchgasen (2) stromaufwärts des Katalysators in mehrere Abschnitte aufgeteilt wird, wobei die Abschnitte quer zu dem Rauchgasstrom auf Höhe des Katalysators jeweils einen Querschnitt ungleich null zwischen 0,3 und 5 m² aufweisen, und
- während des Speisens des Katalysators mit zu denitrifizierenden Rauchgasen (2) über alle Abschnitte des Einspeisungsbereichs (V) die verschiedenen Abschnitte aufeinanderfolgend mit dem Regenerationsfluid (1) gespeist werden, derart, dass mindestens 80 % der Menge des Regenerationsfluids (1) den mit dem mit Regenerationsfluid gespeisten Abschnitt verbundenen Teil des Katalysators (101) erreicht, wobei die Temperatur an der Eintrittsfläche dieses Teils des Katalysators auf mindestens 220 °C, vorzugsweise auf mindestens 250 °C gebracht wird.

2. Verfahren nach Anspruch 1, **dadurch gekennzeichnet, dass** die Aufteilung des Einspeisungsbereichs (V) des Katalysators (101) virtuell durch lufttechnische Einschließung von mehr als 80 % des Durchflusses des Regenerationsfluids (1) im Inneren des mit dem Fluid gespeisten Abschnitts erfolgt.

3. Verfahren nach Anspruch 1, **dadurch gekennzeichnet, dass** die Aufteilung des Einspeisungsbereichs (V) des Katalysators (101) auf physische Weise erfolgt.

4. Verfahren nach Anspruch 3, **dadurch gekennzeichnet, dass** zur physischen Aufteilung des Einspeisungsbereichs (V) des Katalysators (101) unmittelbar stromaufwärts des Katalysators angeordnete Platten zur Kanalisierung des Regenerationsfluids (1) verwendet werden.

5. Verfahren nach einem der vorhergehenden Ansprüche, **dadurch gekennzeichnet, dass** das Regenerationsfluid (1) durch ein sich von den zu reinigenden Rauchgasen (2) unterscheidendes heißes Gas gebildet wird.

6. Verfahren nach Anspruch 5, **dadurch gekennzeichnet, dass** das Regenerationsfluid (1) aus vorzugsweise überhitztem Frischdampf mit einer Temperatur von mindestens 220 °C gebildet wird.

7. Verfahren nach einem der Ansprüche 1 bis 4, **dadurch gekennzeichnet, dass** das Regenerationsfluid (1) aus einem Teil der zu denitrifizierenden Rauchgase (2) gebildet ist, welcher stromaufwärts des Katalysators (101) bei einer Temperatur von mindestens 220 °C entnommen wird.

8. Anlage zur Reinigung von Rauchgasen, umfassend:
- einen katalytischen Reaktor mit einem Katalysator (101) zur Denitrifikation der Rauchgase (2),
- eine Einspeisungseinrichtung zum Speisen des Katalysators (101) mit thermischem Regenerationsfluid (1), welches eine Temperatur aufweist, die höher als die Temperatur der zu denitrifizierenden Rauchgase (2) ist und gleichzeitig zwischen 220 °C und 450 °C liegt,
- Verteilereinrichtungen (102) zur Verteilung des eingespeisten Regenerationsfluids (1), wobei die Verteilereinrichtungen in mehrere Gruppen mindestens eines Austrittselements aufgeteilt sind, wobei diese Gruppen stromaufwärts des Katalysators (101) jeweils in den Abschnitten des Einspeisungsbereichs (V) zum Speisen des Katalysators (101) mit zu denitrifizierenden Rauchgasen (2) angeordnet sind, wobei die Abschnitte quer zu dem Rauchgasstrom auf Höhe des Katalysators jeweils einen Querschnitt ungleich null zwischen 0,3 und 5 m² aufweisen, und
- Steuereinrichtungen (103) zum Steuern der Speisung der Verteilereinrichtungen (102) mit dem Regenerationsfluid (1), wobei die Steuereinrichtungen zum aufeinanderfolgenden Speisen der verschiedenen Gruppen von Auslasselement(en) mit dem Regenerationsfluid während der Speisung des Katalysators (101) mit zu denitrifizierenden Rauchgasen (2) über alle Abschnitte des Einspeisungsbereichs (V) ausgebildet sind.

9. Anlage nach Anspruch 8, **dadurch gekennzeichnet, dass** die Auslasselemente der Verteilereinrichtungen (102) Düsen sind.

10. Anlage nach einem der Ansprüche 8 oder 9, **dadurch gekennzeichnet, dass** die Steuereinrichtungen (103) mindestens ein Ventil für jede Gruppe von Auslasselement(en) der Verteilereinrichtungen (102) umfassen.

11. Anlage nach einem der Ansprüche 8 bis 10, **dadurch gekennzeichnet, dass** die Anlage des Weiteren stromabwärts der Verteilereinrichtungen (102) und stromaufwärts des Katalysators (101) angeordnete Begrenzungsplatten zum Einschließen des Regenerationsfluids (1) umfasst.

## Claims

1. Method for the thermal regeneration of a catalyst (101) for the denitrification of fumes (2), in which
• a regeneration fluid (1) for the catalyst is provided, which has a temperature that is both higher than that of the fumes to be denitrified (2) and ranges between 220°C and 450°C,
• upstream of the catalyst the region (V) for supplying the catalyst with fumes to be denitrified (2) is divided into several parts, each of which in cross-section to the flux of the fumes has a section other than zero amounting to between 0.3 and 5 m² at the level of the catalyst, and
• while the catalyst is being supplied with fumes to be denitrified (2) via all the parts of the supply region (V), the different parts are successively supplied one by one with the regeneration fluid (1) so that at least 80% of the quantity of regeneration fluid (1) reaches the portion of the catalyst (101) associated with the part being supplied with regeneration fluid, bringing the temperature at the level of the entry surface of this portion of the catalyst to at least 220°C, preferably at least 250°C.

2. Method according to claim 1, **characterised in that** the division of the supply region (V) of the catalyst (101) is conducted by virtual means by confining more than 80% of the flow of the regeneration fluid (1) by airflow inside the part supplied with this fluid.

3. Method according to claim 1, **characterised in that** the division of the supply region (V) of the catalyst (101) is conducted by physical means.

4. Method according to claim 3, **characterised in that** plates for channelling the regeneration fluid (1) arranged immediately upstream of the catalyst are used for physical division of the supply region (V) of the catalyst (101).

5. Method according to any one of the preceding claims, **characterised in that** the regeneration fluid (1) is formed by a hot gas separate from the fumes to be purified (2).

6. Method according to claim 5, **characterised in that** the regeneration fluid (1) is formed by live steam, preferably superheated, having a temperature of at least 220°C.

7. Method according to any one of claims 1 to 4, **characterised in that** the regeneration fluid (1) is formed by a portion of the fumes to be denitrified (2) collected upstream of the catalyst (101) at a temperature of at least 220°C.

8. Installation for the purification of fumes comprising:
• a catalytic reactor containing a catalyst (101) for the denitrification of fumes (2),
• a supply of a thermal regeneration fluid (1) to the catalyst (101), which has a temperature that is both higher than that of the fumes to be denitrified (2) and ranges between 220°C and 450°C,
• means (102) for distributing the regeneration fluid (1) coming from the supply, wherein these distribution means are divided into several groups of at least one outlet element, and these groups are located upstream of the catalyst (101) respectively in parts of the region (V) for supplying the catalyst (101) with fumes to be denitrified (2), and in cross-section to the flux of the fumes, each of said parts has a section other than zero amounting to between 0.3 and 5 m² at the level of the catalyst, and
• means (103) for controlling the supply of the distribution means (102) with regeneration fluid (1), wherein while the catalyst is being supplied with fumes to be denitrified (2) through all the parts of the supply region (V), these control means are able to successively supply the different groups of outlet element(s) one by one with the regeneration fluid.

9. Installation according to claim 8, **characterised in that** the outlet elements of the distribution means (102) are nozzles.

10. Installation according to one of claims 8 or 9, **characterised in that** the control means (103) comprise at least one valve for each group of outlet element(s) of the distribution means (102).

11. Installation according to any one of claims 8 to 10, **characterised in that** it additionally comprises plates for channelling the regeneration fluid (1) arranged downstream of the distribution means (102) and upstream of the catalyst (101).
